# EUROPÄISCHE PATENTSCHRIFT

(11) **EP 2 741 979 B1**
(45) Veröffentlichungstag und Bekanntmachung des Hinweises auf die Patenterteilung: **02.03.2016**
(21) Anmeldenummer: 12728256.4
(22) Anmeldetag: 15.06.2012
(51) Int. Cl.: B65G 17/08, B65G 17/26

(54) **BREITENVARIABLE TRANSPORTSPUR EINER TRANSPORTSTRECKE ZUR BEFÖRDERUNG VON ARTIKELN**
WIDTH-VARIABLE TRANSPORT PATH OF A CONVEYOR LINE FOR CONVEYING ARTICLES
TRAJET DE TRANSPORT, VARIABLE EN LARGEUR, D' UNE VOIE DE TRANSPORT POUR TRANSFÉRER DES ARTICLES

(30) Priorität: 12.08.2011 DE 102011080895
(43) Veröffentlichungstag der Anmeldung: 18.06.2014
(73) Patentinhaber: KRONES Aktiengesellschaft, 93073 Neutraubling (DE)
(72) Erfinder: HASTREITER, Christian, 93073 Neutraubling (DE)
(74) Vertreter: Benninger, Johannes
(86) Internationale Anmeldenummer: PCT/EP2012/061464
(87) Internationale Veröffentlichungsnummer: WO 2013/023811

(56) Entgegenhaltungen:
- EP-A1- 0 551 804
- EP-A1- 0 649 803
- US-A- 3 915 025
- US-A- 5 020 659
- US-A1- 2003 168 321

## Beschreibung

Die vorliegende Erfindung betrifft eine breitenvariable Transportspur einer Transportstrecke zur Beförderung von Artikeln mit den Merkmalen des unabhängigen Anspruchs 1. Weiterhin betrifft die Erfindung ein als Transportband der Beförderung von Artikeln dienendes endlos umlaufendes Gliederband, mit den Merkmalen des unabhängigen Anspruchs 9.

In Verpackungsmaschinen werden die unterschiedlichsten Beförderungsmittel zur Beförderung von Artikeln eingesetzt. So werden bspw. Behälter, PET-Behälter, Getränkebehälter etc. auf Transportspuren befördert, die durch sog. Glieder- oder Mattenketten gebildet sein können. Je nach gewünschter zu verarbeitender Verpackungsformation werden die Transportspuren in beliebiger Anzahl parallel angeordnet. Je nach Behälterdurchmesser weisen diese Transportspuren ein geeignetes, ggf. variables Abstandsmaß zueinander auf. Die Transportspuren selbst müssen auf die zu verarbeitenden Behälterdurchmesser abgestimmt sein, um die Standsicherheit zu gewährleisten. Viele moderne PET-Behälter weisen sog. Petaloidböden auf, die mehrere kleinere Auswölbungen nach unten bilden, auf denen die Behälter stehen. Da diese Auswölbungen, welche die effektiven Standflächen bilden, jedoch meist auf einem Durchmesser angeordnet sind, der kleiner ist als der Außendurchmesser der Behältermantelflächen, kann bei zu schmalen Transportspuren die Standsicherheit der Behälter gefährdet und ihre Kippgefahr erhöht sein, da unter Umständen die Breite der Transportspur geringer sein kann als der Durchmesser der unteren Auswölbungen der Behälterböden, so dass nicht alle unteren Auswölbungen auf der Transportspur stehen, sondern diese seitlich überragen können.

Werden auf solchen Transportspuren unterschiedliche Behältergrößen befördert, so können zwar die seitlichen Begrenzungsleisten oder -wände durch Einstellung ihrer Abstände voneinander auf diese unterschiedlichen Behältergrößen und -durchmesser abgestimmt werden, nicht jedoch die Gieder- oder Mattenketten der Transportspuren selbst. Bei stark unterschiedlichen zu verarbeitenden Behälterdurchmessern kann dies zu Problemen führen. Dieses Problem wird bei bekannten Verpackungsmaschinen bspw. dadurch gelöst, dass Behälter mit kleinen Durchmessern auf nur einer Spur und Behälter mit größeren Durchmessern auf mehreren zusammengestellten Spuren transportiert werden. Diese Doppelspuren laufen parallel, können bis auf Anschlag, d.h. auf minimalen Abstand voneinander, zusammengeschoben werden und haben ebenso wie die Einzelspur dann ein definiertes Breitenmaß. Alternativ können die Doppelspuren mit einem Abstand zueinander eingestellt werden, wobei jedoch Behälter in dem dadurch gebildeten Zwischenbereich nicht unterfangen und abgestützt werden können. Auch kann durch die festen Abmaße der Transportspurbreiten die Verarbeitung bestimmter Zwischengrößen von Behältern mit mittleren Durchmessern kritisch sein.

Aus Dokument EP 0 551 804 A1 ist ein Kettenförderer bekannt.

Ein vorrangiges Ziel der vorliegenden Erfindung besteht darin, eine Transportspur einer Transportstrecke zur Beförderung von Artikeln wie bspw. Behältern in einer Verpackungsmaschine zur Verfügung zu stellen, die bei gleichbleibender Transport- und Standsicherheit der Artikel und Behälter eine Anpassbarkeit an unterschiedliche Artikel- oder Behältergrößen ermöglicht.

Dieses Ziel der Erfindung wird mit den Gegenständen der unabhängigen Patentansprüche 1 und 9 erreicht. Merkmale vorteilhafter Weiterbildungen der Erfindung ergeben sich aus den abhängigen Ansprüchen. So schlägt die vorliegende Erfindung zur Erreichung des genannten Ziels eine Transportspur einer Transportstrecke zur Förderung von Artikeln oder Behältern vor, die eine sich in Transportgeschwindigkeit bewegende Auflageebene für die Artikel oder Behälter und beidseitig der Transportspur angeordnete Begrenzungen oder Begrenzungsleisten umfasst. Diese meist als Gassenbleche bezeichneten Begrenzungen oder Begrenzungsleisten weisen einen variablen Abstand voneinander auf, was durch eine geeignete manuelle, teilautomatische oder automatische Breiteneinstellbarkeit gewährleistet werden kann. Der Abstand der Begrenzungen oder Begrenzungsleisten voneinander entspricht zumindest der Breite der auf der Transportspur beförderten Artikel oder Behälter. Um unterschiedlich breite Artikel oder Behälter mit unterschiedlich gestalteten Boden- oder Standflächen zuverlässig und ohne erhöhte Kippgefahr befördern zu können, ist die Auflageebene durch ein endlos umlaufendes Gliederband gebildet, das in seiner Breite einstellbar ist. Die Erfindung definiert somit eine Transportspur, welche quer zur Richtung des transportierenden Gutes her gesehen, im Maß eingestellt werden kann, ohne einen "leeren" Zwischenraum zu erzeugen. Auf diese Weise kann für jede Artikelgröße, Behälterdurchmesser etc. die Einstellung der größtmöglichen oder optimalen Spurbreite ermöglicht werden. Auch unterschiedlich große und geformte Artikel oder Behälter mit problematischen Abmessungen oder Bodenflächen wie bspw. sog. Petaloidböden können zuverlässig und ohne erhöhte Kippneigung gleichermaßen transportiert werden, ohne dass für die Beförderung jeweils unterschiedlicher Artikel- oder Behältergrößen aufwändige Umbaumaßnahmen an den Transportspuren erforderlich werden. Zur Einstellung auf eine abweichende Behälter- oder Artikelgröße genügt es vielmehr, die seitlichen Begrenzungsleisten auf den gewünschten neuen Abstand, der mindestens dem Durchmesser der beförderten Artikel oder Behälter entspricht, einzustellen und die Breite der Auflageebene der Transportspur neu zu justieren.

Die erfindungsgemäße Transportspur sieht ein Gliederband vor, das wenigstens zwei miteinander verbundene und in Querrichtung ineinander greifende Teilabschnitte mit variabel einstellbaren Abständen aufweist.

Diese wenigstens zwei miteinander verbundenen und ineinander greifenden Teilabschnitte können vorzugsweise jeweils mit Querverzahnungen zur zumindest teilweise formschlüssigen Verbindung versehen sein. So kann das Gliederband insbesondere durch eine vielteilige Glieder- oder Mattenkette gebildet sein, deren einzelne Glieder jeweils gemeinsam zwischen zwei Endpositionen in ihren Querpositionen zueinander verstellbar oder verschiebbar sind. So beschreibt die Erfindung eine Transportspur, welche aus mindestens zwei parallel laufenden Spursträngen aufgebaut ist. Diese Spurstränge sind beispielsweise mit seitlich angebrachten Stegen, ähnlich einem Kamm derart ausgeformt, dass diese quer zur Laufrichtung ineinander greifen können, wodurch die gewünschte Breiteneinstellbarkeit der Transportspur bzw. des Gliederbandes gegeben ist.

Weiterhin kann jedes einzelne Glied des wenigstens zwei Teilabschnitte umfassenden Gliederbandes der erfindungsgemäßen Transportspur jeweils gelenkige Verbindungen zu in Laufrichtung beidseitig benachbarten Gliedern sowie Auflageabschnitte aufweisen, die quer zur Laufrichtung des Gliederbandes ausgerichtet sind. Die Auflageabschnitte können vorzugsweise durch Eingriffselemente, Stege oder Verzahnungsabschnitte o. dgl. gebildet sein, deren Länge die minimalen und maximalen Abstände der beiden Teilabschnitte quer zur Laufrichtung des Gliederbandes begrenzt. Dies wird dadurch erreicht, dass die Eingriffselemente, Stege oder Verzahnungsabschnitte der zumindest in Teilformschluss miteinander in Eingriff stehenden und in ihren Abständen voneinander einstellbaren Teilabschnitte des Gliederbandes jeweils zur Bildung der Auflageebene ineinander greifen. Die mindestens zwei parallel laufenden Spurstränge können im Abstand zueinander frei eingestellt werden und ermöglichen dadurch die Einstellung einer breitenvariablen Transportspur ohne einen Zwischenbereich in welchem Behälter nicht unterfangen werden. Auf diese Weise kann die optimale Standsicherheit unterschiedlicher Artikel- oder Behältergrößen ermöglicht werden.

Bei einer weiteren alternativen Ausführungsvariante der erfindungsgemäßen Transportspur kann zwischen den beiden randseitigen Teilabschnitten des Gliederbandes ein weiterer Teilabschnitt angeordnet sein, der beidseitig jeweils zu den randseitigen Teilabschnitten weisende Eingriffselemente, Stege, Verzahnungsabschnitte o. dgl. aufweist, die quer zur Laufrichtung des mindestens drei Teilabschnitte aufweisenden Gliederbandes ausgerichtet sind. Die Eingriffselemente, Stege oder Verzahnungsabschnitte der zumindest in Teilformschluss miteinander in Eingriff stehenden und in ihren Abständen voneinander einstellbaren drei Teilabschnitte des Gliederbandes greifen dabei jeweils zur Bildung der Auflageebene ineinander. Während zumindest einer der randseitigen Teilabschnitte des Gliederbandes angetrieben und der andere randseitige Teilabschnitt zumindest in seiner Position geführt sein kann, kann der mittlere Teilabschnitt ggf. passiv zwischen den beiden randseitigen Abschnitten angeordnet sein und lediglich durch die beidseitig in die randseitigen Abschnitte eingreifenden Verzahnungen oder Stegverbindungen mit diesen verbunden sein. Prinzipiell können auch mehr als drei solcher Teilabschnitte in der Breite miteinander verbunden sein, sollten jedoch bei größeren Breiten zur besseren Spurhaltung und zur Vermeidung von Fluchtungsabweichungen jeweils Längsführungen aufweisen.

Wahlweise können zumindest an einem randseitigen Teilabschnitt des zwei, drei oder mehr Teilabschnitte aufweisenden Gliederbandes Eingriffsverzahnungen zur Antriebsverbindung mit antreibenden Zahnrädern der Transportstrecke und/oder zur Definition der Längsausrichtung und/oder Breiteneinstellung des Gliederbandes vorgesehen sein.

Die vorliegende Erfindung umfasst weiterhin ein als Transportband der Beförderung von Artikeln dienendes endlos umlaufendes Gliederband, das wenigstens zwei miteinander verbundene und in Querrichtung ineinander greifende Teilabschnitte mit variabel einstellbaren Abständen aufweist. Jedes einzelne Glied des wenigstens zwei Teilabschnitte umfassenden Gliederbandes weist gelenkige Verbindungen zu in Laufrichtung beidseitig benachbarten Gliedern sowie Auflageabschnitte in Gestalt von Eingriffselementen, Stegen, Verzahnungsabschnitten o. dgl. auf, die quer zur Laufrichtung des Gliederbandes ausgerichtet sind. Die Eingriffselemente, Stege oder Verzahnungsabschnitte der zumindest in Teilformschluss miteinander in Eingriff stehenden und in ihren Abständen voneinander einstellbaren Teilabschnitte des Gliederbandes greifen jeweils zur Bildung der Auflageebene ineinander. Die mindestens zwei parallel laufenden Spurstränge des erfindungsgemäßen Gliederbandes können im Abstand zueinander frei eingestellt werden und ermöglichen dadurch die Einstellung einer breitenvariablen Transportspur ohne einen Zwischenbereich in welchem Behälter nicht unterfangen werden. Auf diese Weise kann für alle beförderten Artikel- und Behältergrößen jeweils die optimale Standsicherheit gewährleistet werden.

Es sei vorsorglich darauf hingewiesen, dass bei der Verwendung des Begriffes Artikel alle Arten von beförderten Artikeln, Stückgütern, Behältern, Flaschen, Dosen etc. gemeint sein können, die in unterschiedlichen Abmessungen und Breiten auf einer Transportspur zwischen jeweils zwei in ihren Abständen zueinander einstellbaren Seitenbegrenzungen oder sog. Gassenblechen befördert werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Draufsicht auf zwei unterschiedliche Breiteneinstellungen einer Transportspur zur Beförderung von Behältern.
Fig. 2 zeigt eine schematische Perspektivansicht eines Teilabschnitts einer Gliederkette, die Teil einer Transsportspur gemäß Fig. 1 ist.
Fig. 3 zeigt in verschiedenen Ansichten eine erste Variante einer mehrteiligen Gliederkette, die in unterschiedlichen Breiten einstellbar ist.
Fig. 4 zeigt in verschiedenen Ansichten eine zweite Variante einer mehrteiligen Gliederkette, die in unterschiedlichen Breiten einstellbar ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

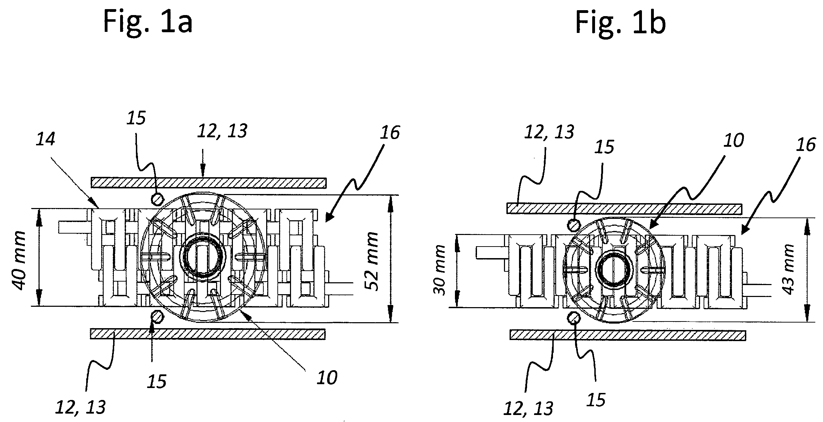

Die schematische Draufsicht der Fig. 1 zeigt zwei unterschiedliche Breiteneinstellungen einer Transportspur zur Beförderung von Behältern. So zeigt die schematische Draufsicht der Fig. 1 a eine Breiteneinstellung für transportierte Behälter 10 mit einem Durchmesser von ca. 52 mm. Die seitlichen Abstände der beiden als Seitenbegrenzungen 12 dienenden Gassenbleche 13 sind für diese Behälterdurchmesser auf einen Wert von etwas mehr als 52 mm einzustellen, um ein Klemmen von Behältern 10 zu vermeiden. Ein die Transportspur 14 bildendes Gliederband 16 ist für diese Behältergröße auf eine Breite von ca. 40 mm eingestellt, wodurch auch Behälter 10 mit entsprechender effektiver Standfläche, bspw. aufgrund eines petaloidartig geformten Bodens, noch kippsicher befördert werden können. Die maximale Breite der Transportspur 14 bzw. des Gliederbandes 16 ist begrenzt, da bei dieser Ausführungsvariante jeweils zu beiden Seiten der Transportspur 14 Einteilfinger 15 ihren Platz finden müssen, die weder mit den Gassenblechen 13 noch mit der Gliederkette bzw. dem Gliederband 16 kollidieren dürfen. Die Einteilfinger 15 dienen der bedarfsweisen Gruppierung der Behälter 10; sie tauchen in vertikaler Richtung von unterhalb der Transportebene zu beiden Seiten der Transportspur 14 auf und können durch eine Relativbewegung parallel zur Förderbewegung der Transportspur 14 einzelne Behälter 10 gegenüber der Förderbewegung der Transportspur 14 verzögern oder ggf. auch beschleunigen.

Die schematische Draufsicht der Fig. 1b zeigt eine reduzierte Breiteneinstellung für transportierte Behälter 10 kleineren Durchmessers von bspw. ca. 43 mm. Die seitlichen Abstände der beiden als Seitenbegrenzungen 12 dienenden Gassenbleche 13 sind für diese Behälterdurchmesser auf einen Wert von etwas mehr als 43 mm einzustellen, um auch hier ein Klemmen der Behälter 10 zu vermeiden. Das die Transportspur 14 bildende Gliederband 16 ist für diese Behältergröße auf eine Breite von ca. 30 mm eingestellt, wodurch auch Behälter 10 mit entsprechend kleiner effektiven Standfläche kippsicher befördert werden können. Die maximale Breite der Transportspur 14 bzw. des Gliederbandes 16 ist auch bei dieser Einstellung begrenzt, da die sich zu beiden Seiten der Transportspur 14 bewegenden Einteilfinger 15 ihren Platz finden müssen und weder mit den Gassenblechen 13 noch mit der Gliederkette bzw. dem Gliederband 16 kollidieren sollen.

Sowohl die Einstellung der Einteilfinger 15 als auch der Gassenbleche 13 bzw. Seitenbegrenzungen 12 ist entsprechend Fig. 1 a und Fig. 1b an die jeweilige Breiteneinstellung des Gliederbandes 16 angepasst. Die Breiteneinstellung der Gassenbleche 13 bzw. Seitenbegrenzungen 12 kann wahlweise manuell oder auch teil- oder vollautomatisch erfolgen. Die Gliederbänder 16 der Transportspuren 14 sind vorzugsweise über entsprechende Koppelelemente (nicht dargestellt) in ihrer Breite einzustellen, bspw. über Zahnradantriebe, auf denen die Gliederbänder 16 aufliegen und über die der Vorschub der als Endloszugmittel ausgebildeten Gliederbänder 16 erfolgt.

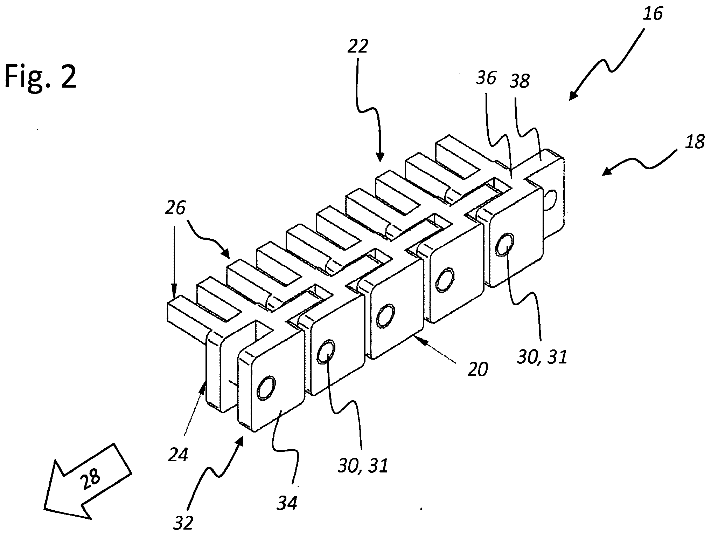

Die schematische Perspektivansicht der Fig. 2 zeigt einen Teilabschnitt einer Gliederkette oder eines Gliederbandes 16, die Teil einer Transsportspur 14 gemäß Fig. 1 ist. Das gezeigte Gliederband 16 weist zwei miteinander verbundene und in Querrichtung ineinander greifende Teilabschnitte 18 mit variabel einstellbaren Abständen auf. Von diesen beiden ineinander greifenden Teilabschnitten 18 zeigt die Darstellung der Fig. 2 lediglich einen Teilabschnitt 18, der im Wesentlichen die beiden Funktionselemente eines Spurstranges 20 und eines Auflageabschnittes 22 umfasst. Der Spurstrang 20 ist durch eine Vielzahl von gelenkig miteinander verbundenen Spurgliedern 24 gebildet, die an ihren Seitenflächen, die zum jeweils anderen Teilabschnitt (nicht dargestellt) weisen, jeweils zwei kammartige Stege 26 aufweisen. Die Stege 26 der beiden miteinander verbundenen Teilabschnitte 18, die dadurch ein breiteneinstellbares Gliederband 16 bildend, greifen jeweils ineinander und bilden dadurch gemeinsam mit den beiden randseitigen Abschnitten der Spurstränge 20 den breiteneinstellbaren Auflageabschnitt 22 und damit eine breiteneinstellbare Auflageebene zur Beförderung unterschiedlich breiter Artikel oder Behälter 10 (vgl. Fig. 1).

Wie die Fig. 2 erkennen lässt, sind die Spurglieder 24 jeweils über gelenkig bewegliche, um quer zur Förderrichtung 28 schwenkbare Bolzenverbindungen 30 miteinander verbunden und bilden dadurch bspw. ein endlos umlaufendes Zugmittel in Gestalt einer Matten- oder Gliederkette (vgl. Fig. 1, Fig. 3, Fig. 4) zur horizontalen Beförderung einer Vielzahl von hintereinander stehenden Artikeln oder Behältern definierten Durchmessers. Jedes Spurglied 24 weist einen U-förmigen Grundkörper 32 auf, dessen beide parallelen Schenkel 34 den Bolzen 31 aufnehmen. Am Basisabschnitt 36 des Grundkörpers 32 ist mittig eine senkrecht abstehende Lasche 38 angeordnet, die im Bolzen 31 des benachbarten Spurgliedes 24 gelagert ist. Die Gestaltung der Lasche 38 ist grundsätzlich variabel. Im gezeigten Ausführungsbeispiel sind die Seitenflächen des Grundkörpers 32 und der Lasche 38 jedoch einheitlich gestaltet, da sie einen Teil der randseitigen Auflagefläche für die Behälter 10 bilden, deren Auflageflächen auch auf den Oberseiten der Spurstränge 20 ruhen, so dass diese möglichst wenig zerklüftet gestaltet sein sollten. Die nach außen weisenden Seitenflächen der Grundkörper 32 der einzelnen gelenkig miteinander verbundenen Spurglieder 24 bilden die Randseiten des Gliederbandes, während an den Außenseiten der inneren Schenkel 34 an den zueinander weisenden Innenflächen der Teilabschnitte 18 des Gliederbandes 16 jeweils zwei Stege 26 angeordnet sind, die in Zusammenwirkung mit den korrespondierenden Stegen des jeweils anderen Teilabschnittes (in Fig.2 nicht dargestellt) den breitenvariablen mittleren Auflageabschnitt 22 bilden. Die einzelnen Spurglieder 24 können bspw. durch Spritzgussteile aus Kunststoff oder einem Verbundmaterial gefertigt sein, wobei die Bolzenverbindung 30 bspw. einen Bolzen 31 aus Metall umfassen kann. Ggf. können die Spurglieder 24 auch durch ein Metallmaterial gebildet sein, bspw. durch Leichtmetallbauteile, die mittels Druckgussverfahren hergestellt sind.

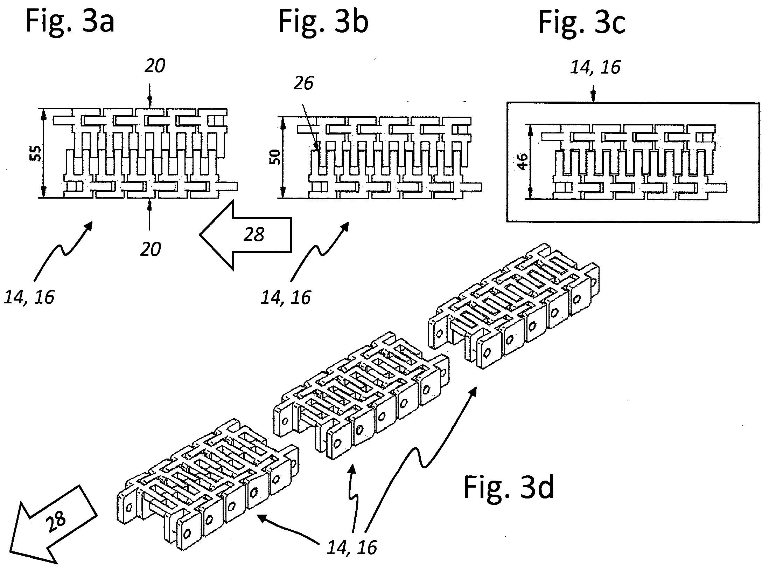

Die schematischen Darstellungen der Fig. 3 verdeutlichen die unterschiedlichen Breiteneinstellungen des anhand der Fig. 2 in ihren Details erläuterten Gliederbandes 16, das aus zwei miteinander verbundenen und in ihren Abständen zueinander einstellbaren Spursträngen 20 gebildet ist. So zeigt die Fig. 3a einen ersten Betriebszustand, bei dem die beiden Spurstränge 20 in einen maximalen Abstand voneinander gebracht sind, so dass das Gliederband 16 eine Außenbreite von ca. 55 mm aufweisen kann. Die maximale Breiteneinstellung ist dabei so gewählt, dass die zueinander weisenden Stege 26 der beiden Spurstränge 20 noch über einen kurzen Weg ineinander greifen.

Die Fig. 3b zeigt einen zweiten Betriebszustand, bei dem die beiden Spurstränge 20 in einen mittleren Abstand voneinander gebracht sind, so dass das Gliederband 16 eine Außenbreite von ca. 50 mm aufweisen kann. Die mittlere Breiteneinstellung ist dabei so gewählt, dass die zueinander weisenden Stege 26 der beiden Spurstränge 20 über ca. die Hälfte oder etwas mehr ihrer Länge ineinander greifen. Dagegen zeigt die Fig. 3c einen dritten Betriebszustand, bei dem die beiden Spurstränge 20 in einen minimalen Abstand voneinander gebracht sind, so dass das Gliederband 16 eine Außenbreite von ca. 46 mm aufweisen kann. Die minimale Breiteneinstellung ist dabei so gewählt, dass die zueinander weisenden Stege 26 der beiden Spurstränge 20 weitgehend über ihre gesamte Länge ineinander greifen. Die Stirnseiten der Stege 26 eines Spurstrangs 20 können dabei jeweils an die inneren Schenkel 34 der Spurglieder 24 des jeweils anderen Spurstrangs 20 stoßen (vgl. Fig. 2), wie dies in Fig. 3c angedeutet ist.

Die perspektivische Darstellung der Fig. 3d verdeutlicht nochmals von links nach rechts die unterschiedlichen Breiteneinstellungen des Gliederbandes 16 der Transportspur 14, wobei die linke Darstellung die maximale Breiteneinstellung gemäß Fig. 3a, die mittlere Darstellung die Breiteneinstellung gemäß Fig. 3b und die rechte Darstellung die minimale Breiteneinstellung gemäß Fig. 3c zeigt.

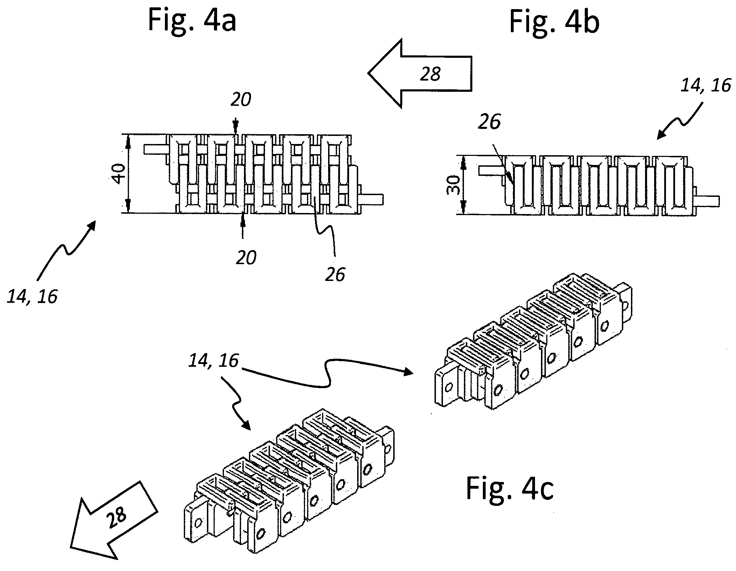

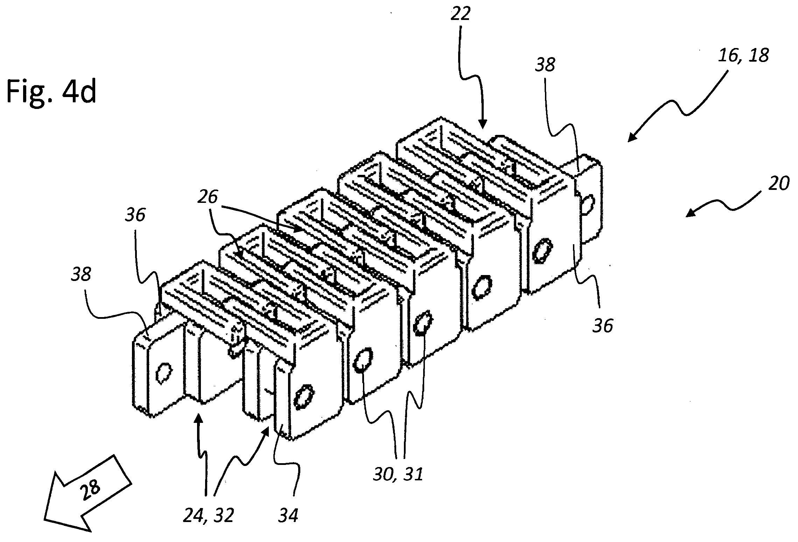

Die schematischen Darstellungen der Fig. 4 verdeutlichen unterschiedliche Breiteneinstellungen einer alternativen Ausführungsvariante eines Gliederbandes 16, das wie die in den Fig. 2 und 3 gezeigte Variante aus zwei miteinander verbundenen und in ihren Abständen zueinander einstellbaren Spursträngen 20 gebildet ist. So zeigt die Fig. 4a einen ersten Betriebszustand, bei dem die beiden Spurstränge 20 in einen maximalen Abstand voneinander gebracht sind, so dass das Gliederband 16 eine Außenbreite von ca. 40 mm aufweisen kann. Die maximale Breiteneinstellung ist dabei so gewählt, dass die zueinander weisenden Stege 26 der beiden Spurstränge 20 über einen ausreichenden Weg ineinander greifen. Die Fig. 4b zeigt einen weiteren Betriebszustand, bei dem die beiden Spurstränge 20 in einen minimalen Abstand voneinander gebracht sind, so dass das Gliederband 16 eine Außenbreite von ca. 30 mm aufweisen kann. Die minimale Breiteneinstellung ist dabei so gewählt, dass die zueinander weisenden Stege 26 der beiden Spurstränge 20 weitgehend über ihre gesamte Länge ineinander greifen.

Wie die schematische Darstellung der Fig. 4d erkennen lässt, sind die Spurglieder 24 jeweils über gelenkig bewegliche, um quer zur Förderrichtung 28 schwenkbare Bolzenverbindungen 30 miteinander verbunden und bilden dadurch bspw. ein endlos umlaufendes Zugmittel in Gestalt einer Matten- oder Gliederkette 16 zur horizontalen Beförderung einer Vielzahl von hintereinander stehenden Artikeln oder Behältern definierten Durchmessers. Jedes Spurglied 24 weist einen U-förmigen Grundkörper 32 auf, dessen beide parallelen Schenkel 34 den Bolzen 31 aufnehmen. Am Basisabschnitt 36 des Grundkörpers 32 ist mittig eine senkrecht abstehende Lasche 38 angeordnet, die im Bolzen 31 des benachbarten Spurgliedes 24 gelagert ist. Im gezeigten Ausführungsbeispiel verbinden die Stege 26 jeweils die beiden Schenkel 34 des Grundkörpers 32 des Spurgliedes 24 und bilden in ihrer Gesamtheit die obere Auflagefläche des Gliederbandes 16, wobei sich die Stege über die gesamte Breite des Gliederbandes 16 erstrecken. Die nach außen weisenden Seitenflächen der Grundkörper 32 der einzelnen gelenkig miteinander verbundenen Spurglieder 24 bilden die Randseiten des Gliederbandes 16, während an den nach oben zur Auflagefläche weisenden Kanten der äußeren und inneren Schenkel 34 beider Teilabschnitte 18 des Gliederbandes 16 jeweils zwei Stege 26 angeordnet sind, die in Zusammenwirkung mit den korrespondierenden Stegen 26 des jeweils anderen Teilabschnittes 18 den breitenvariablen Auflageabschnitt 22 bilden.

Die perspektivische Darstellung der Fig. 4c verdeutlicht nochmals unterschiedliche Breiteneinstellungen des Gliederbandes 16 der Transportspur 14, wobei die linke Darstellung die maximale Breiteneinstellung gemäß Fig. 4a und die rechte Darstellung die minimale Breiteneinstellung gemäß Fig. 4b zeigt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Behälter
- 12: Seitenbegrenzung
- 13: Gassenblech
- 14: Transportspur
- 15: Einteilfinger
- 16: Gliederband, Gliederkette
- 18: Teilabschnitt
- 20: Spu rstrang
- 22: Auflageabschnitt, Auflageebene
- 24: Spurglied
- 26: Steg
- 28: Förderrichtung, Laufrichtung
- 30: Bolzenverbindung
- 31: Bolzen
- 32: Grundkörper
- 34: Schenkel
- 36: Basisabschnitt
- 38: Lasche

## Patentansprüche

1. Transportspur (14) einer Transportstrecke zur Förderung von Artikeln oder Behältern (10), umfassend eine sich in Transportgeschwindigkeit bewegende Auflageebene für die Artikel oder Behälter (10) und seitliche Begrenzungen (12) beidseitig der Transportspur (14), die einen variablen Abstand voneinander aufweisen, welcher mindestens der Breite der auf der Transportspur (14) beförderten Artikel oder Behälter (10) entspricht, wobei die Auflageebene durch ein endlos umlaufendes, in seiner Breite einstellbares Gliederband (16) gebildet ist, **dadurch gekennzeichnet, dass** das Gliederband wenigstens zwei miteinander verbundene und in Querrichtung ineinander greifende Teilabschnitte (18) mit variabel einstellbaren Abständen aufweist.

2. Transportspur nach Anspruch 1, bei der die wenigstens zwei miteinander verbundenen und ineinander greifenden Teilabschnitte (18) jeweils mit Querverzahnungen zur zumindest teilweise formschlüssigen Verbindung versehen sind.

3. Transportspur nach Anspruch 1 oder 2, bei der das Gliederband (16) durch eine vielteilige Glieder- oder Mattenkette gebildet ist, deren einzelne Glieder (24) jeweils gemeinsam zwischen zwei Endpositionen in ihren Querpositionen zueinander verstellbar oder verschiebbar sind.

4. Transportspur nach einem der Ansprüche 1 bis 3, bei der jedes einzelne Glied (24) des wenigstens zwei Teilabschnitte (18) umfassenden Gliederbandes (16) gelenkige Verbindungen (30) zu in Laufrichtung (28) beidseitig benachbarten Gliedern (24) sowie Auflageabschnitte (22) aufweist, die quer zur Laufrichtung (28) des Gliederbandes (16) ausgerichtet sind.

5. Transportspur nach Anspruch 4, bei der die Auflageabschnitte (28) durch Eingriffselemente, Stege (26) oder Verzahnungsabschnitte o. dgl. gebildet sind, deren Länge die minimalen und maximalen Abstände der beiden Teilabschnitte (18) quer zur Laufrichtung (28) des Gliederbandes (16) begrenzt.

6. Transportspur nach Anspruch 4 oder 5, bei der die Eingriffselemente, Stege (26) oder Verzahnungsabschnitte der zumindest in Teilformschluss miteinander in Eingriff stehenden und in ihren Abständen voneinander einstellbaren Teilabschnitte (18) des Gliederbandes (16) jeweils zur Bildung der Auflageebene ineinander greifen.

7. Transportspur (14) nach einem der Ansprüche 1 bis 6, bei der zwischen den beiden randseitigen Teilabschnitten (18) des Gliederbandes (16) ein weiterer Teilabschnitt angeordnet ist, der beidseitig jeweils zu den randseitigen Teilabschnitten (18) weisende Eingriffselemente, Stege (26), Verzahnungsabschnitte o. dgl. aufweist, die quer zur Laufrichtung (28) des mindestens drei Teilabschnitte aufweisenden Gliederbandes (16) ausgerichtet sind, wobei die Eingriffselemente, Stege (26) oder Verzahnungsabschnitte der zumindest in Teilformschluss miteinander in Eingriff stehenden und in ihren Abständen voneinander einstellbaren drei Teilabschnitte (18) des Gliederbandes (16) jeweils zur Bildung der Auflageebene ineinander greifen.

8. Transportspur nach einem der Ansprüche 1 bis 7, bei der zumindest an einem randseitigen Teilabschnitt (18) des zwei, drei oder mehr Teilabschnitte (18) aufweisenden Gliederbandes (16) Eingriffsverzahnungen zur Antriebsverbindung mit antreibenden Zahnrädern der Transportstrecke und/oder zur Definition der Längsausrichtung und/oder Breiteneinstellung des Gliederbandes (16) vorgesehen sind.

9. Als Transportband der Beförderung von Artikeln oder Behältern (10) dienendes endlos umlaufendes Gliederband (16), das wenigstens zwei miteinander verbundene und in Querrichtung zu einer Laufrichtung (28) ineinander greifende Teilabschnitte (18) mit variabel einstellbaren Abständen aufweist, wobei jedes einzelne Glied (24) des wenigstens zwei Teilabschnitte (18) umfassenden Gliederbandes (16) gelenkige Verbindungen (30) zu in Laufrichtung (28) beidseitig benachbarten Gliedern (24) sowie Auflageabschnitte (22) in Gestalt von Eingriffselementen, Stegen (26), Verzahnungsabschnitten o. dgl. aufweist, die quer zur Laufrichtung (28) des Gliederbandes (16) ausgerichtet sind, wobei die Eingriffselemente, Stege (26) oder Verzahnungsabschnitte der zumindest in Teilformschluss miteinander in Eingriff stehenden und in ihren Abständen voneinander einstellbaren Teilabschnitte (18) des Gliederbandes (16) jeweils zur Bildung der Auflageebene ineinander greifen.

## Claims

1. A transport track (14) of a transport route for conveying articles or containers (10) comprising a support surface for the articles or containers (10), which support surface moves at transport speed, and lateral limits (12) on both sides of the transport track (14), which lateral limits (12) have a variable distance from each other corresponding to at least the width of the articles or containers (10) being conveyed on the transport track (14), wherein the support surface is formed by an endlessly circulating, width-adjustable link belt (16), **characterised in that** the link belt has at least two partial sections (18) with variably adjustable distances, which partial sections (18) are connected with each other and engage with each other in a transverse direction.

2. The transport track as recited in claim 1, in which the at least two interconnected and interengaging partial sections (18) are respectively provided with transverse toothings for an at least partially form-locking connection.

3. The transport track as recited in claim 1 or 2, in which the link belt (16) is formed by a multi-part link chain or modular conveyor belt, the individual links (24) of which are adjustable or shiftable respectively together between two end positions in their transverse positions in relation to each other.

4. The transport track as recited in one of the claims 1 to 3, in which each individual link (24) of the link belt (16) comprising at least two partial sections (18) has articulated connections (30) with links (24) adjacent on both sides in the direction of movement (28) as well as support sections (22), which are aligned transversely to the direction of movement (28) of the link belt (16).

5. The transport track as recited in claim 4, in which the support sections (28) are formed by engagement elements, ridges (26), or toothing sections, or the like, the length of which limits the minimum and maximum distances of the two partial sections (18) transversely to the direction of movement (28) of the link belt (16).

6. The transport track as recited in claim 4 or 5, in which the engagement elements, ridges (26), or toothing sections of the partial sections (18) of the link belt (16) being engaged into each other at least in a partial form-lock and being adjustable in their distances from each other respectively engage into each other for forming the support surface.

7. The transport track (14) as recited in one of the claims 1 to 6, in which, arranged between the two edge-side partial sections (18) of the link belt (16), is a further partial section, which has engagement elements, ridges (26), toothing sections, or the like, on both sides respectively facing toward the edge-side partial sections (18), which engagement elements, ridges (26), toothing sections, or the like, are aligned transversely to the direction of movement (28) of the link belt (16) having at least three partial sections, wherein the engagement elements, ridges (26), or toothing sections of the three partial sections (18) of the link belt (16) being engaged into each other at least in a partial form-lock and being adjustable in their distances from each other respectively engage into each other for forming the support surface.

8. The transport track as recited in one of the claims 1 to 7, in which at least at one edge-side partial section (18) of the link belt (16) having two, three, or more partial sections (18), engagement toothings are provided for the drive connection of the transport lane by driving gear wheels and/or for the definition of the longitudinal alignment and/or the width adjustment of the link belt (16).

9. An endlessly circulating link belt (16) serving as a transport belt for conveying articles or containers (10), which transport belt has at least two partial sections (18) with variably adjustable distances, which partial sections (18) are connected with each other and engage with each other in a transverse direction to a direction of movement (28), wherein each individual link (24) of the link belt (16) comprising at least two partial sections (18) has articulated connections (30) with links (24) adjacent on both sides in the direction of movement (28) as well as support sections (22) taking the form of engagement elements, ridges (26), toothing sections, or the like, which are aligned transversely to the direction of movement (28) of the link belt (16), wherein the engagement elements, ridges (26), or toothing sections of the partial sections (18) of the link belt (16) being engaged into each other at least in a partial form-lock and being adjustable in their distances from each other respectively engage into each other for forming the support surface.

## Revendications

1. Voie de transport (14) d'une section de transport pour transporter des articles ou récipients (10), comprenant un plan d'appui pour les articles ou récipients (10) qui se déplace à la vitesse de transport ainsi que des limitations latérales (12) de part et d'autre de la voie de transport (14) qui présentent une distance variable les unes de autres laquelle correspond au moins à la largeur des articles ou récipients (10) transportés sur la voie de transport (14), ledit plan d'appui étant constitué par une bande transporteuse à maillons (16) circulant sans fin qui est réglable dans sa largeur, **caractérisée par le fait que** la bande transporteuse à maillons présente au moins deux tronçons (18) à distances réglables de façon variable qui sont reliés entre eux et sont en prise les uns dans les autres dans la direction transversale.

2. Voie de transport selon la revendication 1, dans laquelle lesdits au moins deux tronçons (18) reliés entre eux et en prise les uns dans les autres sont munis chacun de dentures transversales pour une liaison au moins en partie à engagement positif.

3. Voie de transport selon la revendication 1 ou 2, dans laquelle ladite bande transporteuse à maillons (16) est formée par une chaîne à maillons ou à tapis en plusieurs parties dont les maillons (24) individuels sont réglables ou déplaçables les uns par rapport aux autres dans leurs positions transversales, respectivement en commun, entre deux positions extrêmes.

4. Voie de transport selon l'une quelconque des revendications 1 à 3, dans laquelle chaque maillon (24) individuel de la bande transporteuse à maillons (16) comprenant au moins deux tronçons (18) présente des liaisons articulées (30) à des maillons (24) voisins de part et d'autre dans la direction de marche (28), ainsi que des sections d'appui (22) qui sont orientées transversalement à la direction de marche (28) de la bande transporteuse à maillons (16).

5. Voie de transport selon la revendication 4, dans laquelle les sections d'appui (28) sont formées par des éléments d'engagement, entretoises (26) ou sections à denture ou similaire dont la longueur limite les distances minimales et maximales des deux tronçons (18) transversalement à la direction de marche (28) de la bande transporteuse à maillons (16).

6. Voie de transport selon la revendication 4 ou 5, dans laquelle les éléments d'engagement, entretoises (26) ou sections à denture des tronçons (18) de la bande transporteuse à maillons (16) qui sont en prise au moins en partie à engagement positif et dont les distances les uns des autres sont réglables s'engagent les uns dans les autres respectivement pour former ledit plan d'appui.

7. Voie de transport (14) selon l'une quelconque des revendications 1 à 6, dans laquelle un autre tronçon est disposé entre les deux tronçons (18) marginaux de la bande transporteuse à maillons (16), qui présente de part et d'autre des éléments d'engagement, entretoises (26), sections à denture ou similaire qui montrent chacun vers les tronçons (18) marginaux et qui sont orientés transversalement à la direction de marche (28) de la bande transporteuse à maillons (16) présentant au moins trois tronçons, lesdits éléments d'engagement, entretoises (26) ou sections à denture des trois tronçons (18) de la bande transporteuse à maillons (16) qui sont en prise au moins en partie à engagement positif et dont les distances les uns des autres sont réglables s'engagent les uns dans les autres respectivement pour former ledit plan d'appui.

8. Voie de transport selon l'une quelconque des revendications 1 à 7, dans laquelle sur au moins un tronçon (18) marginal de la bande transporteuse à maillons (16) présentant deux, trois tronçons ou plus sont prévues des dentures d'engrènement pour la liaison à entraînement à des roues dentées motrices de la section de transport et/ou pour la définition de l'orientation longitudinale et/ou du réglage en largeur de la bande transporteuse à maillons (16).

9. Bande transporteuse à maillons (16) circulant sans fin qui fait fonction de bande transporteuse pour le transport d'articles ou de récipients (10) et qui présente au moins deux tronçons (18) à distances réglables de façon variable qui sont reliés entre eux et sont en prise les uns dans les autres dans la direction transversale à une direction de marche (28), chaque maillon (24) individuel de la bande transporteuse à maillons (16) comprenant au moins deux tronçons (18) présente des liaisons articulées (30) à des maillons (24) voisins de part et d'autre dans la direction de marche (28), ainsi que des sections d'appui (22) sous forme d'éléments d'engagement, entretoises (26), sections à denture ou similaire qui sont orientés transversalement à la direction de marche (28) de la bande transporteuse à maillons (16), lesdits éléments d'engagement, entretoises (26) ou sections à denture des tronçons (18) de la bande transporteuse à maillons (16) qui sont en prise au moins en partie à engagement positif et dont les distances les uns des autres sont réglables s'engagent les uns dans les autres respectivement pour former ledit plan d'appui.
